**Europäisches Patentamt**

**European Patent Office**

**Office européen des brevets**

(19)

(11) Veröffentlichungsnummer: **0 054 874 B1**

(12) **EUROPÄISCHE PATENTSCHRIFT**

(45) Veröffentlichungstag der Patentschrift:
09.05.84

(51) Int. Cl.³: **C 04 B 21/02, C 04 B 29/02**

(21) Anmeldenummer: 81110401.7

(22) Anmeldetag: 12.12.81

(54) **Anorganischer Schaumstoff und Verfahren zu seiner Herstellung.**

(30) Priorität: 20.12.80 DE 3048354
08.10.81 DE 3140011

(43) Veröffentlichungstag der Anmeldung:
30.06.82 Patentblatt 82/26

(45) Bekanntmachung des Hinweises auf die Patenterteilung:
09.05.84 Patentblatt 84/19

(84) Benannte Vertragsstaaten:
AT BE CH DE FR GB LI NL SE

(56) Entgegenhaltungen:
DE - A - 2 639 227
DE - A - 2 714 735
DE - A - 2 756 198
US - A - 3 382 082
US - A - 3 762 935

(73) Patentinhaber: HOECHST AKTIENGESELLSCHAFT,
Postfach 80 03 20, D-6230 Frankfurt am Main 80 (DE)

(72) Erfinder: Eckardt, Peter, Dr., Brandenburger Weg 14,
D-6238 Hofheim am Taunus (DE)
Erfinder: Dürsch, Walter, Dr., In der Braubach 4,
D-6240 Königstein/Taunus (DE)

## Beschreibung

Die vorliegende Erfindung betrifft einen neuen, anorganischen Schaumstoff sowie ein Verfahren zu seiner Herstellung unter Verwendung von Portland-Zement und Polyphosphorsäure.

Es sind bereits anorganische Schaumstoffe auf Basis Gips oder Zement bekannt. Wegen der hohen Dichte, die normalerweise nicht unter 400 g/l liegen, ist die Wärmedämmung jedoch im Vergleich zu den leichten organischen Schaumstoffen gering. Leichte anorganische Schäume, die aus Wasserglas hergestellt werden, haben herstellungsbedingt einen hohen Anteil an leichtlöslichen Salzen, der zu Ausblühungen führen kann, wenn nicht nachträglich die Alkalisalze herausgelöst werden.

Asbesthaltige Schaumstoffe besitzen den Vorteil einer gewissen mechanischen Flexibilität. Nachteilig ist aber die ausserordentliche gesundheitliche Schädlichkeit des Rohstoffes.

In der US-Patentschrift 3 382 082 werden anorganische Schaumstoffe beschrieben, die aus freier wässriger Phosphorsäure und Aluminiumhydroxid unter Zusatz von kleinen Mengen eines gasentwickelnden Metallpulvers (wie zum Beispiel Aluminium) und von fein verteiltem Aluminiumphosphats hergestellt werden. Dabei setzen sich Phosphorsäure und Aluminiumhydroxyd stets zu primären Aluminiumphosphat um, während die Bildung von sekundärem oder tertiärem Aluminiumphosphat von der Gegenwart ausreichender Mengen an Aluminiumhydroxid abhängt. Die mechanische Stabilisierung des geschäumten Formkörpers geschieht durch Trocknen bei 95–100°C.

In der US-Patentschrift 3 762 935 wird auf Spalte 1 zu diesem Verfahren angemerkt, dass der Schaum während des Erhärtens teilweise zusammenfällt. Es wird daher empfohlen, bei der Herstellung des Schaumstoffs das feste Aluminiumphosphat durch gemahlene Glasfritte zu ersetzen. Ferner soll nach dem Trocknen der geschäumte Formkörper auf ca. 500–1100°C erhitzt werden, damit die Glasfritte schmilzt und die innere Oberfläche der Schaumstoff-Poren überzieht. Nachteilig an diesem zuletzt genannten Verfahren ist die Notwendigkeit, den Schaumstoff bei hohen Temperaturen auszuhärten.

Es kommt hinzu, dass die Reaktion von Aluminiumhydroxid oder Aluminiumoxid mit freier Phosphorsäure stark exotherm ist und rasch verlaufen kann. Damit besteht die Gefahr, dass der Reaktionsansatz zu heiss wird und die aus dem Blähmittel entstehenden Gase durch verdampfendes Wasser ausgetrieben werden.

In der DE-Offenlegungsschrift 27 14 735 wird ein poröses, feuerfestes, isolierendes Material beschrieben. Es lässt sich z.B. herstellen aus einem flüssigen Gemisch von verdünnter Phosphorsäure und einer 50%igen Lösung von Monoaluminiumphosphat in Wasser und einem festen Gemisch von Kalziumaluminat und Alkalisilikat, gegebenenfalls unter Zusatz feuerfester Stoffe wie Quarzsand, sowie einem Metallpulver, das in saurem Milieu als Blähmittel wirkt. Als Kalziumaluminat wird Tonerde-Schmelzcement verwendet. Die so hergestellten Produkte sind jedoch ziemlich schwer (Dichte über 550g/dm³). Da von wässrigen Lösungen ausgegangen wird, enthält das Material noch viel Wasser, das verdampft, sobald hohe Temperaturen erreicht werden. Beim Erhitzen auf ca. 500°C kommt es zu erheblichem Schrumpf unter Rissbildung.

Es bestand daher die Aufgabe einen anorganischen Schaumstoff mit guten mechanischen und thermischen Eigenschaften bereitzustellen, der die Nachteile der bekannten Produkte nicht aufweist und der sich einfach und wirtschaftlich herstellen lässt. Es wurde nun ein Verfahren zur Herstellung eines phosphathaltigen anorganischen Schaumstoffs aus Zement, einer Phosphorsäure und einem Blähmittel gefunden. Es ist dadurch gekennzeichnet, dass man aus Portland-Zement, gegebenenfalls zusammen mit Tonerdeschmelzzement und/oder Oxiden von Kalzium, Magnesium, Zink, Aluminium und Eisen und/oder Hydroxiden von Aluminium und/oder Eisen sowie Polyphosphorsäure, die einen Gehalt von mindestens 76 Gew.-% $P_2O_5$ aufweist, und einem in saurem Milieu wirksamen Blähmittel, gegebenenfalls unter Zusatz von Füllstoffen und/oder Verstärkungsmitteln, durch intensives Vermischen eine Mischung herstellt, wobei das Äquivalentverhältnis (Aluminium + Magnesium + Kalzium + Eisen zu Phosphat) 0,8:1 bis 3,0:1 betragen soll und die Menge des Blähmittels so bemessen wird, dass bei der Reaktion mit Polyphosphorsäure 0,5 bis 8 ml Gas pro g der Mischung entbunden werden, man das aufschäumende Gemisch in eine Form füllt, es erforderlichenfalls von aussen auf eine Temperatur von 80°C aufheizt und es nach Abklingen der exothermen Reaktion unter Hitzeeinwirkung aushärtet.

Das Aushärten unter Hitzeeinwirkung kann dadurch geschehen, dass man weiter auf eine Temperatur von mindestens 250°C erhitzt und man mindestens 5 Minuten in diesem Temperaturbereich hält. Dabei soll eine Temperatur von 700°C nicht überschritten werden. Bevorzugt ist ein Bereich von 250–350°C.

Der Schaumstoff kann bereits nach dem Abklingen der exothermen Reaktion der Form entnommen werden. Es ist jedoch bei dieser Variante bevorzugt ihn erst nach dem Aushärten bei mindestens 250°C, zweckmässigerweise nach Abkühlen, der Form zu entnehmen.

Sofern das Äquivalentverhältnis von (Al + Mg + Ca + Fe): Phosphat grösser als 1.0:1 ist, kann man auch das aufgeschäumte Gemisch durch Behandlung mit überhitztem Wasserdampf von mindestens 2 bar aushärten.

Es ist bei dieser Variante bevorzugt, den Schaumstoff bereits nach dem Abklingen der exothermen Reaktion der Form zu entnehmen und so den Zutritt des Wasserdampfs zu erleichtern. Bei Verwendung einer Form, die Wasserdampf durchlassend ist, kann jedoch auch hier die Form erst nach der Aushärtung des Schaumstoffs entfernt werden.

2

Es ist überraschend, dass mit Äquivalentverhältnissen von (Aluminium + Wasser + Kalzium + Eisen): Phosphat von über 1,0:1, d.h. mit einem Überschuss der basischen Komponenten, noch wertvolle, mechanisch stabile Schaumstoffe erhalten werden. Man müsste erwarten, dass bei solchen Äquivalentverhältnissen ein Überschuss des stark alkalisch reagierenden Portlandzements vorliegt und dieser mit der Polyphosphorsäure in einer schnellen, exothermen Reaktion zu tertiären Ortho-Phosphaten führt. Tatsächlich tritt diese Reaktion auch sehr rasch ein, wenn nur genügend Wasser vorhanden ist. Tertiäre Ortho-Phosphate enthalten keine Hydroxylgruppen mehr und können daher nicht durch Wasserabspaltung zu Ultra-Phosphaten vernetzen.

Es zeigte sich jedoch, dass auch noch mit einem beträchtlichen Überschuss an Portlandzement, bezogen auf das Äquivalentverhältnis (Aluminium + Magnesium + Kalzium + Eisen): Phosphat von über 1,0 bis 3,0:1 das aufschäumende Gemisch noch sauer reagiert. Auch Gemische mit Äquivalent-Verhältnissen über 3, beispielsweise von 5 bis 10: 1 reagieren nach dem Aufschäumen noch sauer, lassen sich allerdings nicht mehr einwandfrei mischen.

Ohne die thermische Nachbehandlung würde der Schaumstoff beim Behandeln mit Wasser sauer reagieren und zerstört werden.

Bei der Aushärtung des Schaumstoffs durch Einwirkung von Wasserdampf hängt die Mindestreaktionszeit von der angewandten Temperatur ab. Bei 10 bar Wasserdampfdruck reichen bereits 1 Stunde aus, bei 4 bar etwa 2 Stunden. Bei 2 bar sind etwa 10 Stunden zur Aushärtung nötig. Ein noch längeres Erhitzen mit Wasserdampf schadet nicht, aber erhöht die Festigkeit nur noch unwesentlich. Man wird daher die Behandlung abbrechen, wenn die gewünschten mechanischen Eigenschaften Siliziumdioxid, das durch Säure aus Portlandzement freigesetzt wurde, mit dem Überschuss an Zement zu Kalzium-Hydrosilikaten, die dem Schaumstoff eine hervorragende Festigkeit verleihen.

Bevorzugt Portland-Zementtypen sind PZ 35, PZ 45 und PZ 55, insbesondere PZ 35. Wünschenswert ist ein möglichst hoher Gehalt der Verbindungen von $2\,CaO \cdot SiO_2$, $3\,CaO \cdot SiO_2$ und $3\,CaO \cdot Al_2O_3$ im Zement. Portland-Zement kann teilweise auch durch Mischungen aus Portland-Zement und Hochofen-Schlacke ersetzt werden (sogenannte Hütten- oder Hochofen-Zemente). Es ist bevorzugt wenn - bezogen auf die Summe der Feststoffanteile - der Anteil an Portland-Zement nicht unter 60 Gew.-%, vorzugsweise nicht unter 70 Gew.-% liegt.

Bezogen auf das Gewicht des Portland-Zements, können bis zu 43%, vorzugsweise bis zu 30%, insbesondere 1 bis 20% an Tonerdeschmelzzement und/oder Oxiden von Kalzium, Magnesium, Zink, Aluminium und Eisen und/oder Hydroxiden von Aluminium und/oder Eisen vorhanden sein. Besonders bevorzugt ist es, wenn die Menge dieser Anteile 3–6% (bezogen auf das Gewicht des Portland-Zements) beträgt. Es ist vorteilhaft wenn diese Bestandteile in fein gemahlener Form verwendet werden.

Für die Umsetzung sind handelsübliche Polyphosphorsäuren mit einem Gehalt von mindestens 76% $P_2O_5$ geeignet. Bevorzugt werden Polyphosphorsäuren mit einem Gehalt von 84% $P_2O_5$. Die genannten Säuren kristallisieren auch bei längerer Lagerung nicht aus.

Als Blähmittel werden in der Hauptsache Carbonate, insbesondere Kristallwasser enthaltende Carbonate wie z.B. das basische Magnesiumcarbonat der Formel $4\,MgCO_3 \cdot Mg(OH)_2 \cdot 5\,H_2O$ eingesetzt. Kleine Mengen Erdalkalicarbonat sind von vornherein in Portland-Zement enthalten und wirken ebenfalls als Blähmittel.

Aluminium- und Eisenpulver sind beim erfindungsgemässen Verfahren wenig wirksam, obwohl sie in Gegenwart von wässrigen Phosphorsäure gut als Blähmittel einsetzbar sind.

Als Blähmittel sind ferner geeignet leicht flüchtige organische Verbindungen wie z.B. Fluorkohlenwasserstoffe. Ebenso eignen sich organische Verbindungen, die bei erhöhten Temperaturen zu gasförmigen Produkten zerfallen, wie z.B. Azodicarbonamid und Azoisobuttersäuredinitril.

Die Menge des Blähmittels soll so bemessen sein, dass bei der Reaktion mit Polyphosphorsäure 0,5 bis 8 ml Gas (gemessen bei 80°C und 1 bar) pro g der Reaktionsmischung entbunden werden. Bevorzugt sind Gasmengen von 3–7 ml pro g der Reaktionsmischung.

Dem Reaktionsgemisch können, ohne grösseren Einfluss auf die mechanischen und thermischen Eigenschaften des Endproduktes, feingemahlene Füllstoffe zugesetzt werden. Diese Füllstoffe sollen auch bei 100°C weder mit der Polyphosphorsäure noch mit Metallphosphaten reagieren. Verwendbar ist hierfür eine weite Palette industrieller Abfallprodukte, wie z.B. Flugaschen, die in der Hauptsache aus Siliciumdioxid bestehen und bei der Ferrosiliziumherstellung anfallen. Ferner können Quarzmehle, Kaolin, Rus, Talkum oder fein gemahlener Graphit eingesetzt werden. Sofern diese Füllstoffe in kleinerem Umfang noch reagierende Oxide, wie z.B. Aluminiumoxid, enthalten, müssen diese bei der Berechnung des Ansatzes berücksichtigt werden.

Wenn neben oder anstelle der pulverförmigen Füllstoffe anorganische Fasern als Verstärkungsmittel eingesetzt werden, lässt sich die mechanische Stabilität des erhaltenen Schaumstoffs verbessern. Auch diese Verstärkungsmittel sollen gegenüber Polyphosphorsäure oder Metallphosphat inert sein. Als Verstärkungsmittel werden bevorzugt eingesetzt kurzgeschnittene Glas- oder Mineralwollefasern, oder Kohlenstofffasern. Daneben lassen sich kleinere Mengen schwer schmelzbarer organischer Fasern, wie z.B. aromatischer Polyamide einarbeiten, sofern der entstehende Schaumstoff nicht auf Temperaturen über 300°C beansprucht werden soll.

Damit das erfindungsgemässe Verfahren glatt abläuft, ist es notwendig die Reaktionsprodukte gründlich zu vermischen. Es ist bevorzugt, zunächst die festen Bestandteile zu vermischen, beispielsweise durch gemeinsames Vermahlen. Zur Beschleunigung der Umsetzung können geringe Mengen Wasser (0,1–1 Gew.-%) bezogen auf Polyphosphorsäure, zugesetzt werden. Das Wasser wird vorteilhafterweise zugegeben in Form von kristallwasserhaltigen Salzen (Beispiel: basisches Magnesiumcarbonat oder Aluminiumsulfat). Bei Zusatz von mehr als 1% Wasser, wird die Reaktion häufig so beschleunigt, dass keine ausreichende Verarbeitungszeit gegeben ist.

Weitere Stoffe können zur Modifizierung der Eigenschaften des Endproduktes zugesetzt werden. Gemahlenes Kalziumsilicat führt zu einer Erhöhung der Viskosität des reagierenden Schaums. Ebenso wirkt Natriumsilicat, wenn auch hier der Nachteil besteht, dass im Gebrauch Natriumsalze ausblühen oder ausgewaschen werden können. Kleine Mengen von Borsäure beschleunigen ebenfalls die Umsetzung und erhöhen die Beständigkeit des erhaltenen Schaumstoffs bei höheren Temperaturen.

Das Äquivalentverhältnis ist definiert als das Verhältnis der Gesamtvalenz der Metalle zu denen der Phosphationen. Eine Formel für das Äquivalentverhältnis ist angegeben in Offenlegungsschrift DE-2 756 198, S. 13.

Das Gemisch aus Polyphosphorsäure, und gegebenenfalls anderen Bestandteilen schäumt langsam auf. Gleichzeitig steigt die Temperatur. Bei Erreichen einer Temperatur von ca. 80°C kommt es zu einer raschen Temperaturerhöhung auf etwa 200°C, die von einer neuen Expansion begleitet ist. Falls die Temperatur von 80°C nicht von selbst erreicht wird, ist es daher notwendig den Ansatz von aussen zu beheizen. Ein Beheizen ist meistens auch nötig, um den Schaumstoff auf Temperaturen von mindestens 250°C, im allgemeinen 250–300°C, zu bringen. Ohne diese thermische Nachbehandlung oder die Aushärtung mit überhitztem Wasserdampf würde der Schaumstoff beim Auswaschen mit Wasser sauer reagieren. Längeres Erhitzen als 5 Minuten auf Temperaturen von mindestens 250°C ist möglich, bringt aber keine besonderen Vorteile mehr.

Polyphosphorsäure setzt sich mit Metalloxiden wie CaO, MgO und ZnO in wenigen Sekunden in einer äusserst heftigen Reaktion um, wobei eine feste Masse resultiert. Ein Schaum lässt sich daraus nicht herstellen.

Ebenso reagiert Portland-Zement mit äquivalenten Mengen Orthophosphorsäure (75–100 Gew.-% $H_3PO_4$) so rasch, dass sich die Masse nicht gleichmässig vermischen lässt und unter Wasserzugabe sofort fest wird. Es ist daher überraschend, dass sich die Umsetzung von Polyphosphorsäure mit Portland-Zement zur Herstellung eines Schaumstoffs benutzen lässt.

In Abhängigkeit von dem Anteil an Portland-Zement, dem verwendeten Äquivalentgewicht und der Menge des entbundenen Gases lassen sich die Eigenschaften des erhaltenen Schaumstoffs erheblich modifizieren. Der Schaumstoff weist Dichten von 100–500 g/l und offene und geschlossene, zellenförmige Poren mit 0,5–3 mm Durchmesser auf. Das Volumenverhältnis von Feststoff zu Poren nach der Gasentwicklung und Erstarrung des Materials kann im Bereich von etwa 1:5 bis 1:20 liegen, was Dichten von 450 g/l bzw. 100 g/l etwa entspricht. Bevorzugt sind Volumenverhältnisse von Feststoff zu Poren von 1:8 (Dichte 250 g/l) bis 1:15 (Dichte ca. 150 g/l). Der erhaltene Schaumstoff weist im allgemeinen folgende Zusammensetzung auf:

18–50 Gew.-% CaO
2–20 Gew.-% $Al_2O_3$
5–35 Gew.-% $SiO_2$
15–50 Gew.-% $P_2O_5$
0– 1 Gew.-% Alkalimetalloxide
0– 8 Gew.-% ZnO, MgO, FeO, und/oder $Fe_2O_3$
0– 2 Gew.-% $SO_3$
0– 5 Gew.-% C
0– 8 Gew.-% $B_2O_3$

Die Eigenschaften (wie z.B. Dichte, Porengrösse, Druck- und Zugfestigkeit, Temperaturbeständigkeit) der Produkte hängen vom Äquivalentverhältnis Metall/Phosphat ab. Liegt dieses Verhältnis (Al + Mg + Ca + Fe): Phosphat bei 0.8:1 bis 1.0:1, so ist die Härtung bei 250°C ohne überhitzten Wasserdampf bevorzugt. In diesem Fall enthält der resultierende Schaumstoff 18–45 Gew.-% CaO, 5–20 Gew.-% $SiO_2$ und 38–50 Gew.-% $P_2O_5$.

Bevorzugt sind dabei Schaumstoffe in denen das Gewichtsverhältnis ($Al_2O_3$ + CaO) : $P_2O_5$ 0,8:1 bis 1,3:1, insbesondere 0,9:1 bis 1,2:1, vorzugsweise 1,0:1 bis 1,15:1 beträgt.

Liegt das Äquivalentverhältnis Metall/Phosphat über 1.0:1, aber höchstens bei 3.0:1, so ist die Aushärtung mittels überhitztem Wasserdampf vorzuziehen. Eine Härtung durch Temperaturbehandlung bei mindestens 250°C ist aber ebenfalls möglich. Die nach diesem Verfahren erhaltenen Stoffe weisen in diesem Fall im allgemeinen folgende Zusammensetzung auf:

18–50 Gew.-% CaO
2–20 Gew.-% $Al_2O_3$
5–35 Gew.-% $SiO_2$
mindestens 15, aber weniger als 38 Gew.-% $P_2O_5$
0– 1 Gew.-% Alkalimetalloxide,
0– 8 Gew.-% $B_2O_3$
0– 8 Gew.-% ZnO, MgO, FeO und/oder $Fe_2O_3$
0– 2 Gew.-% $SO_3$ und
0– 5 Gew.-% C.

Ein bevorzugter $CaO/P_2O_5$-Bereich wird angegeben durch die folgende Gleichung
$$53,26 - 0,217 \cdot [P_2O_5] \geqq [CaO] \geqq 29.56 - 0,304 \cdot [P_2O_5],$$
wobei [CaO] und [$P_2O_5$] Gewichtsprozente an CaO und $P_2O_5$ bedeuten. Bevorzugte Gehalte an $B_2O_3$ liegen bei 0–5, insbesondere 0.5–2.5 Gew.-%. Bevorzugt sind ferner Schaumstoffe, in denen das Gewichtsverhältnis ($Al_2O_3$ + CaO) : $P_2O_5$ 1,0 : 1 bis 2,5 : 1, insbesondere 1,2 : 1 bis 1,8 : 1, sowie Schaumstoffe, in denen das Gewichtsverhältnis $SiO_2$ : $P_2O_5$ 0,4 : 1 bis 1,4 : 1, insbesondere 0,7 : 1 bis 1,0 : 1 beträgt. Bevorzugte Bereiche der Zusammensetzung sind 30–45 Gew.-% CaO, 12–25% $SiO_2$ und 20–30% $P_2O_5$.

Der erhaltene Schaumstoff eignet sich vor allem zur Anwendung als nicht brennbares Isoliermaterial, insbesondere zur Wärmedämmung. Er enthält im allgemeinen keine organischen Anteile, ist hitzestabil bis über 1000°C und spaltet keine giftigen Gase ab.

Nahezu in allen Formen lässt sich die Verschäumung vornehmen, so dass sich Bauelemente beliebiger Gestalt, beispielsweise in Form von Platten oder Prismen erhalten lassen.

Das erfindungsgemässe Verfahren zur Herstellung von Schaumstoff kann auch industriell angewandt werden, um metallische Rohrleitungen oder Metallkessel etc. thermisch zu isolieren. Beispielsweise kann man das Reaktionsgemisch zwischen eine innere und eine äussere Kesselwand aus Metall einfüllen, aufschäumen und aushärten. Der fertige anorganische Schaumstoff haftet gut an nahezu allen interessierenden Materialien.

Die Erfindung wird durch die nachstehenden Beispiele erläutert.

Beispiel 1:
550 g Portland-Zement PZ 35
20 g Borsäure
10 g feines basisches Magnesiumcarbonat

werden in einer Kugelmühle fein vermahlen. Diese Mischung wird mit 400 g einer linear kondensierten Polyphosphorsäure mit einem Gehalt von 84% $P_2O_5$ vermischt. Während des Rührvorgangs ist die Masse zuerst krümelig, sie wird nach 30 Sek. unter leichter Erwärmung pastös. Nach 1 Min. wird diese Masse in eine Metallform gegeben. Darin dehnt sie sich auf das ca. 10-fache des Ausgangsvolumens aus. Die Temperatur steigt während 3–4 Minuten langsam auf 72°C. Bei Erreichen dieser Temperatur springt die Umsetzung an und unter sehr schneller Temperaturerhöhung auf 215°C wird der Schaumstoff fest. Der Probekörper wird dann während einer halben Stunde auf 250°C erwärmt und dabei auskondensiert. Nach dem Abkühlen erhält man einen Schaumstoff mit einer Dichte von ca. 200 g/l.

Beispiel 2:
440 g Portland-Zement PZ 35
70 g Al(OH)$_3$
50 g Flugasche (bestehend zu 80–90% aus $SiO_2$)
3 g Azodicarbonamid
werden gemischt.
Wie in Beispiel 1 angegeben, wird das Pulver mit 400 g Polyphosphorsäure vermischt und in eine Form gegossen. Die Temperatur steigt während 6 Min. langsam auf 70°C und anschliessend sehr schnell unter starker Aufblähung des Gemisches auf 195°C. Der erhärtete Schaumstoff wird bei 300°C während 15 Min. nachkondensiert. Man erhält ein sehr festes Produkt, mit einer Dichte von ca. 230 g/l.

Beispiel 3:
380 g Portland-Zement
100 g Tonerde-Schmelzzement

10 g sprühgetrocknetes Natriumsilikat mit einem mittleren Gewichtsverhältnis $SiO_2$/$Na_2O$ von 2,0
12 g basisches Magnesiumcarbonat
5 g $Al_2(SO_4)_3 \cdot 18 H_2O$

Wie im Beispiel 1 angegeben, werden die pulverförmigen Bestandteile gut gemischt und anschliessend mit 400 g Polyphosphorsäure während 30 Sek. gut verrührt. Die Masse beginnt nach 1 Min. aufzuschäumen und erreicht nach 3 Min. bereits 195°C. Dabei wird der Schaumstoff fest. Zur Nachkondensation wärmt man ihn kurz auf 300°C. Dies zeigt, dass durch den Zusatz von kristallwasserhaltigen Salzen die Umsetzung stark beschleunigt werden kann.

In allen Beispielen lag der thermische Schrumpf (gemessen nach Tempern bei 300°C während 5 Min. und Abkühlen an der längsten Abmessung des Probekörpers) unter 1%.

Beispiel 4:
1470 g Portland-Zement PZ 35
90 g Tonerde-Schmelzzement
450 g Flugasche (bestehend zu 85–90% aus $SiO_2$)
60 g Borsäure
60 g $Zn_3(PO_4)_2 \cdot 4 H_2O$
30 g basisches Zinkcarbonat

werden in einer Kugelmühle fein vermahlen. In einem Kneter werden 1.200 g Polyphosphorsäure mit einem Gehalt von 84% $P_2O_5$ vorgelegt und unter starker Kühlung mit Wasser wird die feingemahlene Pulvermischung in den Kneter eingetragen. Während des Mischvorganges darf die Temperatur 50°C nicht übersteigen. Nach einer Mischzeit von 6 Min. wird die pastöse Masse ausgetragen und in Formen gefüllt. In diesen Formen dehnt sich die Masse auf das Mehrfache des Ausgangsvolumens aus, dabei steigt die Temperatur innerhalb von 8 Min. auf 220°C und die Masse härtet aus. Die Probekörper werden dann während 10 Min. auf 300°C erhitzt. Man erhält so einen anorganischen Stoff mit einer Dichte von ca. 220 g/l.

Beispiel 5:
205 g Portlandzement PZ 35
5 g Borsäure
40 g einer Flugasche (bestehend zu 80 bis 90% aus $SiO_2$)
12 g fein gemahlener Dolomit (Korngrösse 10 μm)
2 g basisches Magnesiumcarbonat:

werden in einer Kugelmühle während 2 Stunden fein vermahlen.

100 g einer linear kondensierten Polyphosphorsäure mit einem Gehalt von 85% $P_2O_5$ werden mit 2 g Glasfasern (Länge 3 mm, ⌀ 5 μm) vermischt: dazu gibt man unter Rühren die Pulvermischung. Während des Rührvorgangs ist die Masse zuerst krümelig, sie wird nach 30 sec. unter leichter Erwärmung pastös. Nach 1 Minute Mischzeit wird die Masse in eine Metallform gegeben. Darin dehnt sie sich auf das ca. 10-fache des Ausgangsvolumens aus. Die Temperatur steigt während 5 Minuten langsam auf 80°C. Bei Erreichen dieser Temperatur springt die Umsetzung an und unter sehr schneller Temperaturerhöhung auf 215°C wird der Schaumstoff fest. Eine kleine Probe wird mit Wasser benetzt, das Material reagiert stark sauer. Der Schaumstoff wird nach 10 Minuten der Form entnommen und in einem Labor-Autoklaven (2 l) gegeben. Dazu gibt man ca. 200 ml Wasser. Der Autoklav wird auf 150°C erwärmt; dabei stellt sich ein Druck von 4,5 bar ein. Nach 2 Stunden wird der Autoklav abgeschaltet und man lässt ihn abkühlen. Man erhält einen Schaumstoff mit einer Dichte von ca. 210 g/l mit einer hervorragenden Druckfestigkeit. Die Zusammensetzung beträgt:

21,5% $SiO_2$
3,1% $Al_2O_3$
35,9% $CaO$
23.0% $P_2O_5$

Der Rest besteht aus Eisenoxid, Boroxid, Magnesiumoxid, Wasser und anderen Substanzen.

Beispiel 6:
Wie in Beispiel 5 angegeben, werden

170 g Portlandzement PZ 35
15 g fein gemahlener Dolomit
10 g Talkumpulver (Korngrösse unter 20 μm)
30 g Flugasche ($SiO_2$-Füller N von SKW, ca. 80–90% $SiO_2$)

fein gemahlen und unter 100 g Polyphosphorsäure gemischt und in eine Form gegossen. Die Temperatur steigt während 6 Minuten langsam auf 75°C, dabei bläht sich das Gemisch stark auf und reagiert unter Erwärmung auf 195°C. Der erhärtete Schaumstoff wird in einem Trockenschrank auf 300°C erwärmt und 5 Minuten bei dieser Temperatur belassen. Nach dem langsamen Abkühlen erhält man einen sehr festen Schaum mit einem mittleren Porendurchmesser von 2 mm und einer Dichte von 180 g/l. Dieses Material verliert bei 50tägiger Lagerung in Wasser nur 1,0% seines Ausgangsgewichts.

Beispiel 7:
Wie in Beispiel 5 beschrieben, werden

145 g Portlandzement PZ 35
40 g Quarzmehl mit über 99% Kieselsäure und einer mittleren Korngrösse von 27 μm sowie
14 g fein gemahlener Dolomit
2 g $Al_2(SO_4)_3 \cdot 18 H_2O$

gut gemischt und mit 100 g Polyphosphorsäure verrührt. Die Masse beginnt nach einer Minute aufzuschäumen und erreicht nach 4 Minuten 200°C. Der Schaum wird der Form entnommen und in einem Autoklaven bei 10 bar, 185°C 1 Stunde lang einer Wasserdampfbehandlung ausgesetzt. Nach dem Abkühlen erhält man ein festes Produkt mit einer Dichte von 195 g/l.

**Patentansprüche:**

1. Verfahren zur Herstellung eines phosphathaltigen anorganischen Schaumstoffes aus Zement, einer Phosphorsäure und einem Blähmittel, dadurch gekennzeichnet, dass man aus Portland-Zement, gegebenenfalls zusammen mit Tonerdeschmelzzement und/oder Oxiden von Kalzium, Zink, Aluminium und Eisen und/oder Hydroxiden von Aluminium und/oder Eisen sowie Polyphosphorsäure, die einen Gehalt von mindestens 76 Gew.-% $P_2O_5$ aufweist, und einem in saurem Milieu wirksamen Blähmittel, gegebenenfalls unter Zusatz von Füllstoffen und/oder Verstärkungsmitteln, durch intensives Vermischen eine Mischung herstellt, wobei das Äquivalentverhältnis (Aluminium + Magnesium + Kalzium + Eisen) zu Phosphat 0,8:1 bis 3,0:1 betragen soll und die Menge des Blähmittels so bemessen wird, dass bei der Reaktion mit Polyphosphorsäure 0,5–8 ml Gas pro g der Mischung entbunden werden, man das aufschäumende Gemisch in eine Form füllt, es erforderlichenfalls von aussen auf eine Temperatur von 80°C aufheizt, und es nach Abklingen der exothermen Reaktion unter Hitzeeinwirkung aushärtet.

2. Verfahren nach Anspruch 1, dadurch gekennzeichnet, dass man das aufgeschäumte Gemisch nach Abklingen der exothermen Reaktion weiter auf eine Temperatur von mindestens 250°C erhitzt und man mindestens 5 Minuten in diesem Temperaturbereich hält.

3. Verfahren nach Anspruch 1, dadurch gekennzeichnet, dass das Äquivalentverhältnis von (Al + Mg + Ca + Fe) : Phosphat grösser als 1.0 : 1, aber höchstens 3.0 : 1 ist und man das aufgeschäumte Gemisch, nach Abklingen der exothermen Reaktion mit überhitzten Wasserdampf von mindestens 2 bar und dadurch aushärtet.

4. Verfahren nach Anspruch 3, dadurch gekennzeichnet, dass das Äquivalentverhältnis von (Al + Mg + Ca + Fe) : Phosphat grösser als 1.0 : 1, aber höchstens 2.0 : 1 ist.

5. Anorganischer Schaumstoff der Dichte 100–500 g/l mit offenen und geschlossenen Poren mit 0,5–3 mm Durchmesser, einem thermischen Schrumpf, gemessen nach Tempern bei 300°C während 5 Minuten und Abkühlen an der längsten Abmessung des Probekörpers, unter 1% und der Zusammensetzung in der festen Phase von

18–50 Gew.-% $CaO$
2–20 Gew.-% $Al_2O_3$
5–35 Gew.-% $SiO_2$
15–50 Gew.-% $P_2O_5$
0– 1 Gew.-% Alkalimetalloxide
0– 8 Gew.-% $ZnO$, $MgO$, $FeO$, und/oder $Fe_2O_3$
0– 2 Gew.-% $SO_3$
0– 5 Gew.-% C
0– 8 Gew.-% $B_2O_3$

und einem Äquivalentverhältnis von (Al + Mg + Ca + Fe): Phosphat von 0.8 : 1 bis 3.0 : 1.

6. Schaumstoff gemäss Anspruch 5 mit einer Zusammensetzung in der festen Phase von

18–45 Gew.-% CaO
5–20 Gew.-% $SiO_2$
38–50 Gew.-% $P_2O_5$

7. Schaumstoff gemäss Anspruch 6 mit einem Äquivalentverhältnis von (Al + Mg + Ca + Fe): Phosphat von 0.8 : 1 bis 1.0 : 1.

8. Schaumstoff gemäss Anspruch 5 mit einer Zusammensetzung in der Phase von

18–50 Gew.-% CaO
2–20 Gew.-% $Al_2O_3$
5–35 Gew.-% $SiO_2$
mindestens 15 aber weniger als 38 Gew.-% $P_2O_5$
0– 1 Gew.-% Alkalimetalloxide
0– 8 Gew.-% $B_2O_3$,
0– 8 Gew.-% ZnO, MgO, FeO und/oder $Fe_2O_3$
0– 2 Gew.-% $SO_3$
0– 5 Gew.-% C.

9. Schaumstoff gemäss Anspruch 8, dadurch gekennzeichnet, dass das Äquivalentverhältnis (Aluminium + Kalzium + Eisen + Magnesium) : Phosphat grösser als 1,0 : 1 aber höchstens 3,0 : 1, insbesondere grösser als 1,0 : 1 aber höchstens 2,0 : 1 ist.

## Claims

1. A process for manufacturing a phosphate-containing inorganic cellular material from cement, a phosphoric acid and an expanding agent, which comprises preparing a mixture of Portland cement, optionally together with aluminous cement and/or oxides of calcium, zinc, aluminium and iron, and/or hydroxides of aluminium and/or iron, and of polyphosphoric acid containing at least 76 weight % of $P_2O_5$, and of an expanding agent which acts in acidic medium, optionally with addition of fillers and/or reinforcing agents, by intense intermixing; the equivalent ratio (aluminium + magnesium + calcium + iron) to phosphate being in a range of from 0.8 : 1 to 3.0 : 1 and the amount of expanding agent being dosed in such a manner that upon reacting with the polyphosphoric acid from 0.5 to 8 ml of gas are set free per g of mixture; charging the foaming mixture to a mold, heating it, if necessary, from the outside to 80°C, and hardening it under heat after completing the exothermal reaction.

2. The process as claimed in Claim 1, which comprises heating further the foamed mixture after completing the exothermal reaction to a temperature of at least 250°C and maintaining it for at least 5 minutes in this temperature range.

3. The process as claimed in Claim 1, which comprises adjusting the equivalent ratio of (Al + Mg + Ca + Fe) to phosphate to more than 1.0 : 1, but no more than 3.0 : 1, treating the foamed mixture after completing the exthermal reaction with superheated steam of at least 2 bar, and thus hardening it.

4. The process as claimed in Claim 3, wherein the equivalent ratio of (Al + Mg + Ca + Fe) to phosphate is greater than 1.0 : 1, but does not exceed 2.0 : 1.

5. Inorganic cellular material having a density of from 100 to 500 g/l, open or closed pores having a diameter of 0.5 to 3 mm, a thermal shrinkage of below 1% measured after tempering at 300°C for 5 minutes and cooling on the greatest length of the test specimen and the following composition in the solid phase:

18–50 weight % CaO
2–20 weight % $Al_2O_3$
5–35 weight % $SiO_2$
15–50 weight % $P_2O_5$
0– 1 weight % alkali metal oxides
0– 8 weight % ZnO, MgO, FeO and/or $Fe_2O_3$
0– 2 weight % $So_3$
0– 5 weight % C
0– 8 weight % $B_2O_3$

and an equivalent ratio of (Al + Mg + Ca + Fe) to phosphate of from 0.8 : 1 to 3.0 : 1.

6. A cellular material as claimed in Claim 5 having the following composition in the solid phase:

18–45 weight % CaO
5–20 weight % $SiO_2$
38–50 weight % $P_2O_5$

7. A cellular material as claimed in Claim 6 having an equivalent ratio of (Al + Mg + Ca + Fe) to phosphate of from 0.8 : 1 to 1.0 : 1.

8. A cellular material as claimed in Claim 5 having the following composition in the solid phase:

18–50 weight % CaO
2–20 weight % $Al_2O_3$
5–35 weight % $SiO_2$
at least 15, but less than 38 weight % $P_2O_5$
0– 1 weigth % alkali metal oxides
0– 8 weight % $B_2O_3$
0– 8 weight % ZnO, MgO, FeO and/or $Fe_2O_3$
0– 2 weight % $So_3$
0– 5 weight % C.

9. A cellular material as claimed in Claim 8, wherein the equivalent ratio of (aluminium + calcium + iron + magnesium) to phosphate is greater than 1.0 : 1 but does not exceed 3.0 : 1, especially is greater than 1.0 : 1 but does not 2.0 : 1.

## Revendications

1. Procédé pour préparer une mousse inorganique contenant des phosphates à partir de ciment, d'un acide phosphorique et d'un agent gonflant, caractérisé en ce qu'on prépare, par un mélange vigoureux, à partir de ciment Portland, éventuellement avec du ciment alumineux fondu et/ou des oxydes de calcium, de zinc, d'aluminium et de fer et/ou d'hydroxydes d'aluminium et/ou de fer, ainsi que d'acide polyphosphorique présentant une teneur d'au moins 76% en poids

de $P_2O_5$, et d'un agent gonflant actif en milieu acide, éventuellement sous addition de charges et/ou d'agents de reforcement, un mélange dans lequel le rapport équivalent (aluminium + magnésium + calcium + fer) : phosphate doit être compris entre 0,8:1 et 3,0:1, la quantité de l'agent gonflant étant déterminée de façon que, lors de la réaction sur l'acide polyphosphorique, il se dégage 0,5-8 ml de gaz par gramme du mélange; qu'on introduit le mélange moussant dans un moule; qu'on le chauffe si nécessaire à partir de l'extérieur à une température de 80°C; et qu'on le durcit après l'arrêt de la réaction exothermique, sous l'effet de la chaleur.

2. Procédé selon la revendication 1, caractérisé en ce qu'on continue à chauffer à une température d'au moins 250°C le mélange moussant après l'arrêt de la réaction exothermique, et qu'on le maintient à cette température pendant au moins 5 minutes.

3. Procédé selon la revendication 1, caractérisé en ce que le rapport équivalent (Al + Mg + Ca + Fe): phosphate est supérieur à 1,0 : 1 mais au plus égale à 3,0 : 1, et qu'on traite le mélange expansé, après arrêt de la réaction exothermique, par de la vapeur d'eau surchauffée à au moins 2 bar, ce qui en provoque le durcissement.

4. Procédé selon la revendication 3, caractérisé en ce que le rapport équivalent (Al + Mg + Ca + Fe) : phosphate est supérieur à 1,0 : 1 mais au plus égale à 2,0 : 1.

5. Mousse inorganique de masse volumique 100-500 g/l, avec des pores ouverts et fermés de diamètre 0,5-3 mm, présentant un retrait thermique, mesuré après recuit à 300°C pendant 5 minutes et refroidissement, sur la plus grande dimension de l'éprouvette, inférieur à 1%, et ayant en phase solide la composition suivante:

18-50% en poids de CaO
2-20% en poids de $Al_2O_3$
5-35% en poids de $SiO_2$
15-50% en poids de $P_2O_5$
0- 1% en poids d'oxydes de métaux alcalins
0- 8% en poids de ZnO, MgO, FeO et/ou $Fe_2O_3$
0- 2% en poids de $SO_3$
0- 5% en poids de C
0- 8% en poids de $B_2O_3$

avec un rapport équivalent (Al + Mg + Ca + Fe) : phosphate de 0,8 : 1 à 3,0 : 1.

6. Mousse selon la revendication 5, ayant en phase solide la composition suivante:

18-45% en poids de CaO
5-20% en poids de $SiO_2$
38-50% en poids de $P_2O_5$.

7. Mousse selon la revendication 6, avec un rapport équivalent (Al + Mg + Ca + Fe) : phosphate compris entre 0,8 : 1 et 1,0 : 1.

8. Mousse selon la revendication 5, avec, dans la phase, la composition suivante:

18-50% en poids de CaO
2-20% en poids de $Al_2O_3$
5-35% en poids de $SiO_2$
au moins 15 mais moins de 38% en poids de $P_2O_5$
0- 1% en poinds d'oxydes de métaux alcalins
0- 8% en poids de $B_2O_3$
0- 8% en poids de ZnO, MgO, FeO et/ou $Fe_2O_3$
0- 2% en poids de $SO_3$
0- 5% en poids de C.

9. Mousse selon la revendication 8, caractérisée en ce que le rapport équivalent (aluminium + calcium + fer + magnésium) : phosphate est supérieur à 1,0 : 1 mais au plus égal à 3,0 : 1, en particulier supérieur à 1,0 : 1 mais au plus égal à 2,0 : 1.